# EUROPÄISCHE PATENTANMELDUNG

(11) **EP 1 619 433 A1**
(43) Veröffentlichungstag der Anmeldung: **25.01.2006**
(21) Anmeldenummer: 05090189.1
(22) Anmeldetag: 30.06.2005
(51) Int. Cl.: F16L 3/18, F16L 3/16

(54) **Rollenlager mit mindestens einer drehbaren Rolle**

(30) Priorität: 20.07.2004 DE 102004035909
(71) Anmelder: SIEMENS AKTIENGESELLSCHAFT, 80333 München (DE)
(72) Erfinder: Koch, Hermann, 91466 Gerhardshofen (DE)

(57) **Zusammenfassung**

Ein Rollenlager (1) mit mindestens einer drehbaren Rolle (2, 3) dient der Verschiebung eines lang gestreckten Körpers (4). Der lang gestreckte Körper (4) liegt auf der drehbaren Rolle (2, 3) auf und ist quer zur Drehachse der Rolle (2, 3) verschiebbar. Zur Verhinderung eines "Festfressens" des Körpers (4) auf der Rolle (2, 3) ist die drehbare Rolle (2, 3) um eine Achse schwenkbar, die annähernd parallel zur Verschieberichtung des Körpers (4) ausgerichtet ist.

## Beschreibung

Die Erfindung bezieht sich auf ein Rollenlager mit mindestens einer drehbaren Rolle, auf welche ein zu verschiebender lang gestreckter Körper auflegbar ist, wobei die Drehachse der Rolle quer zur Verschieberichtung des Körpers angeordnet ist.

Derartige Rollenlager werden beispielsweise bei der Verlegung von Energieübertragungseinrichtungen wie Kabeln oder gasisolierten Rohrleitern eingesetzt. Der Verlegeweg weist oftmals Biegungen, Kurven, Senken und Hügel auf. Durch die Windungen und Biegungen wird der lang gestreckte Körper entlang seiner Drehachse in sich verdreht. Durch diese Verdrehung wirken zusätzlich zu den Zugkräften weitere Kräfte auf das Rollenlager ein. Aufgrund der gewundenen nicht linearen Verlegewege ist es nötig, den zu verschiebenden lang gestreckten Körper sorgfältig zu führen, um ein Blockieren der drehbaren Rollen oder ein einfressen des Körpers in die Rollenlager zu vermeiden.

Daher liegt der Erfindung die Aufgabe zugrunde, ein Rollenlager anzugeben, welches ein blockierungsfreies Verschieben des lang gestreckten Körpers ermöglicht.

Die Aufgabe wird bei einem Rollenlager der eingangs genannten Art erfindungsgemäß dadurch gelöst, dass die drehbare Rolle um eine Achse schwenkbar ist.

Durch eine schwenkbare Lagerung der drehbaren Rolle kann die Abstützrichtung der Rolle je nach Bedarf eingestellt werden. So können die Rollen beispielsweise bei einer Verlegung eines druckgasisolierten elektrischen Leiters über einen Hügel oder in einer Senke, dem Verlauf des Weges entsprechend, verschwenkt werden. Dadurch ist eine schonendere Umlenkung des zu transportierenden Körpers ermöglicht.

Dabei kann vorteilhaft vorgesehen sein, dass die Achse annähernd parallel zur Verschieberichtung des Körpers liegt.

Insbesondere bei einem Auftreten einer Verwindung des zu transportierenden Körpers aufgrund des Verlegeweges ist ein seitliches Verschwenken der drehbaren Rolle vorteilhaft um auftretende Querkräfte besser abfangen zu können. So ist es beispielsweise möglich, im Bereich von engen Kurven die Stützung des zu verschiebenden Körpers verstärkt auf der dem Kurveninneren zugewandten Seite vorzusehen und die Rolle in diesen Bereich hinein zu verschwenken. Dabei ist die Schwenkachse der Rolle so zu wählen, dass sie annähernd parallel zur Verschieberichtung des Körpers liegt. In einem Kurvenbereich ist auf eine Tangente abzustellen, um welche die Rolle herum schwenkbar angeordnet ist. Da die Rolle auch bei Kurvenverläufen oder in Senken oder auf Hügeln gleichmäßiger belastet wird, ist ein "Fressen" der Rolle nahezu ausgeschlossen.

Eine weitere vorteilhafte Ausgestaltung der Erfindung kann vorsehen, dass die zumindest eine Rolle an einem Schwenklager gelagert ist, welches ein festes Element und ein loses Element aufweist, wobei zumindest eines der Elemente eine gewölbte Gleitfläche aufweist, welche auf dem jeweils anderen Element gleitend gelagert ist.

Durch die Nutzung einer Gleitfläche ist eine nahezu stufenfreie Einstellung der Schwenkbewegung der drehbaren Rolle gewährleistet. Weiterhin ist bei einer entsprechenden Ausdehnung der Gleitfläche ein leichtes Gleiten ermöglicht. Dabei kann vorgesehen sein, dass die Gleitfläche beispielsweise derart gewölbt ist, dass zusätzlich zu der Schwenkbewegung der drehbaren Rolle um eine Achse parallel zur Verschieberichtung des Körpers auch eine Drehbewegung der Rolle um einen senkrechten Anteil und/oder auch ein Verschwenken in der Transportrichtung der Rolle, ermöglicht ist. Eine derartige Bewegung kann beispielsweise durch eine Kugel, die in einer Pfanne gleitend gelagert ist, ermöglicht sein. Die gewölbten Gleitflächen können auch durch entsprechend angeordnete Rollenlager oder ähnliches gebildet sein. So ist die Reibung beim Gleiten vermindert.

Weiterhin kann vorteilhaft vorgesehen sein, dass die Gleitfläche konkav gewölbt ist, oder dass die Gleitfläche konvex gewölbt ist.

Konkave und konvexe Gleitflächen gestatten ein zuverlässiges Gleiten aufeinander, wobei ein Zentrieren und Lagern des bewegbaren Elementes an dem festen Element erfolgt. Ein willkürliches Herausgleiten ist aufgrund der Formgebung verhindert.

Weiterhin kann vorteilhaft vorgesehen sein, dass das feste Element eine konkave Gleitfläche aufweist, auf welcher eine konvexe Gleitfläche des losen Elementes gleitet oder das feste Element eine konvexe Gleitfläche aufweist, auf welcher eine konkave Gleitfläche des losen Elementes gleitet.

Neben der konkaven bzw. konvexen Wölbung in mehreren Richtungen, so dass Kugel-Pfannen-Anordnungen entstehen, kann es auch vorgesehen sein, dass die Wölbung lediglich in einer Richtung vorgesehen ist, so dass eine rinnenförmige Anordnung entsteht. Dadurch ist die freie Bewegbarkeit der Gleitanordnung eingeschränkt. Mit einer solchen Anordnung ist der Verlauf der Schwenkachse einfach festgelegt. Weiterhin können vereinfachte Fertigungsverfahren zur Herstellung des Schwenklagers zur Anwendung gelangen.

Eine weitere vorteilhafte Ausgestaltung kann vorsehen, dass die Verschwenkung der Rolle durch während einer Bewegung des Körpers durch diesen hervorgerufene Kräfte erfolgt.

Wie bereits oben stehend beschrieben, treten bei dem Verlegen eines lang gestreckten Körpers, der auf den entsprechenden Rollenlagern ruht, auch Querkräfte und Torsionskräfte auf. Durch eine entsprechende Ausnutzung derartiger Kräfte können die Schwenkbewegungen der Rolle leicht bewirkt werden. Dies hat den Vorteil, dass ein sich selbst steuerndes System geschaffen ist, welches von Außen keine zusätzliche Energiezufuhr benötigt. Gegebenenfalls sind durch entsprechende Mechaniken auftretende Kräfte umzulenken, um eine Bewegung der verschwenkbaren Rolle in der gewünschten Richtung zu ermöglichen.

Weiterhin kann vorteilhaft vorgesehen sein, dass die Verschwenkung der Rolle durch ein Stellelement erfolgt.

Der Einsatz eines Stellelementes ermöglicht es, gezielt die Verschwenkung der Rolle einzuleiten. Dabei kann vorgesehen sein, dass das Stellelement unabhängig von dem Voranschreiten des Transportes des lang gestreckten Körpers auf dem Rollenlager angesteuert werden kann. Dazu können z. B. elektrische oder hydraulische Hilfsmotoren eingesetzt werden, welche die Schwenkbewegung bewirken. Dies hat den Vorteil, dass die Lagerung gezielt eingestellt werden kann. Die Lage der Auflagepunkte des zu transportierenden Körpers kann so bewusst gewählt und eingestellt werden. Gleichzeitig wird eine ruhige Lagerung des Rollenlagers selbst gewährleistet, da durch Lastwechselreaktionen hervorgerufenen Bewegungen auf die Stellelemente nicht zurückwirken können.

Eine weitere Aufgabe der Erfindung ist es, ein Verfahren zum Verschwenken einer Rolle eines Rollenlagers, wie vorstehend beschrieben, anzugeben, um eine möglichst schonende Verlegung des zu verschiebenden lang gestreckten Körpers zu gewährleisten.

Die Aufgabe wird erfindungsgemäß bei einem vorstehenden Verfahren dadurch gelöst, dass
- an der einen Rolle oder an mindestens zwei Rollen zumindest zwei Auflagepunkte für den Körper angeordnet sind,
- ein Verschwenken der Rolle/Rollen derart erfolgt, dass die Auflagekräfte an den Auflagepunkten annähernd gleich groß sind.

Insbesondere bei einem kreisförmigen Querschnitt des zu verschiebenden lang gestreckten Körpers ergeben sich beispielsweise an zwei zueinander v-förmig angeordneten Rollen, oder an einer Rolle mit einem konkaven Rollenkörper, zwei Auflagepunkte. Je nach Stellung der Rollen bzw. nach Taillierung der einen Rolle sowie dem Durchmesser des lang gestreckten Körpers wandern diese Auflagepunkte auf der Rollenoberfläche. Bei einer Verschwenkung der Rolle oder der Rollen in Abhängigkeit der Auflagekräfte an den Auflagepunkten, wird eine symmetrische Belastung des Rollenlagers erzielt. Durch diese symmetrische Belastung ist ein Verkanten des zu transportierenden Körpers an der oder an den Rollen kaum noch möglich.

Dadurch ist ein "Fressen" des verschiebbaren Körpers an dem Rollenlager nicht mehr zu erwarten.

Im Folgenden wird die Erfindung anhand eines Ausführungsbeispiels in einer Zeichnung schematisch gezeigt und nachfolgend näher beschrieben.

Dabei zeigt die
- Figur 1: eine erste Ausgestaltungsvariante eines Rollenlagers, die
- Figur 2: eine zweite Ausgestaltungsvariante eines Rollenlagers, die
- Figur 3: eine dritte Ausgestaltungsvariante eines Rollenlagers, die
- Figur 4: eine vierte Ausgestaltungsvariante eines Rollenlagers, sowie die
- Figur 5: eine fünfte Ausgestaltungsvariante eines Rollenlagers.

Die in den Figuren gleich wirkenden Baugruppen werden mit den gleichen Bezugszeichen versehen. Sämtliche in den Figuren dargestellten Ausgestaltungsvarianten von Rollenlagern sind mit einem aufgelegten lang gestreckten Körper dargestellt, welcher einen kreisrunden Querschnitt aufweist.

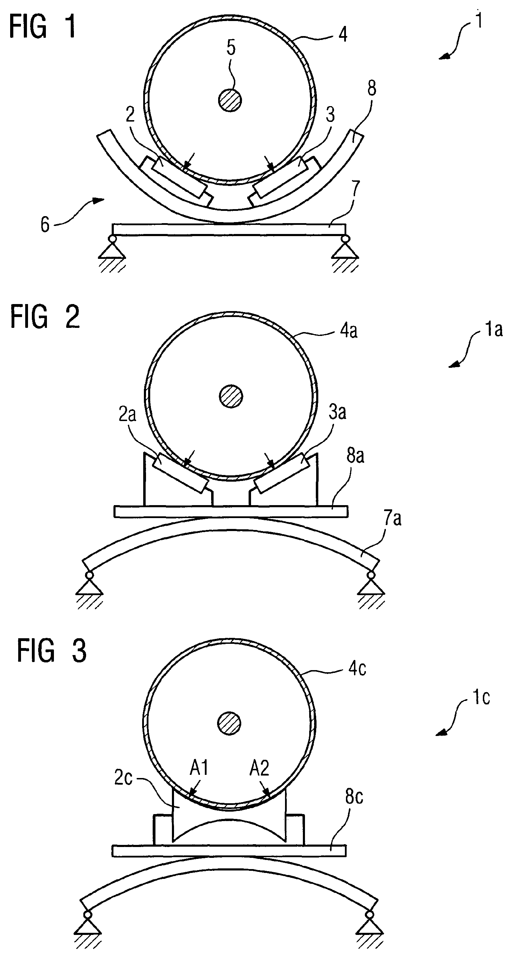

Die in der Figur 1 gezeigte erste Ausführungsvariante eines Rollenlagers 1 weist eine erste drehbare Rolle 2 und eine zweite drehbare Rolle 3 auf. Die erste drehbare Rolle 2 und die zweite drehbare Rolle 3 sind V-förmig zueinander angeordnet, so dass ein gasisolierter elektrischer Leiter 4 mit einem im Wesentlichen kreisrunden Querschnitt aufgelegt werden kann. Der gasisolierte elektrische Leiter 4 weist einen metallischen, rohrförmigen Außenmantel auf. Im Innern ist ein elektrischer Leiter 5 mittels elektrischen Isolatoren von dem Außenmantel des gasisolierten elektrischen Leiters beabstandet gehalten. Im Betriebszustand ist das Innere des gasisolierten elektrischen Leiters 4 mit einem Isoliergas befüllt. Der gasisolierte elektrische Leiter 4 ist aus einer Vielzahl von Stücken zusammengesetzt und bildet einen gestreckten bis zu mehreren 100 oder 1.000 Metern langen Körper aus. Ein gasisolierter elektrischer Leiter 4 wird aus den Einzelstücken zusammengesetzt und im montierten Zustand auf Rollenlagern in seine Verlegeposition befördert. Die in der Figur 1 dargestellten Rollen 2, 3 sind in einem Schwenklager 6 gelagert. Das Schwenklager 6 weist ein festes Element 7 sowie ein loses Element 8 auf. An dem losen Element 8 sind die erste sowie die zweite drehbare Rolle 2, 3 gelagert. Das lose Element 8 weist eine gewölbte Gleitfläche auf, welche auf einer ebenen Fläche des festen Elementes 7 gleiten kann. Bei einer Gleitbewegung der Gleitfläche des losen Elementes 8 werden die an dem losen Element 8 befestigten Rollen 2, 3 verschwenkt. Es kann vorgesehen sein, dass das lose Element eine Kugelkappe ist und Schwenkbewegungen um alle Achsen ermöglicht sind. Durch Führungselemente, wie z. B. in Kulissen geführten Bolzen, kann der Freiheitsgrad der Bewegung eingeschränkt werden, so dass die Rolle beispielsweise nur um eine Achse schwenkbar ist, die annähernd parallel zur Verschieberichtung des Körpers liegt. Die Verschieberichtung des Körpers ist lotrecht zur Zeichenfläche der Figur 1 angeordnet. Zur Führung des losen Elementes können entsprechende mechanische Vorrichtungen vorgesehen sein. Das können beispielsweise Bolzen in Kulissen, Zapfen in Nuten oder ähnliche Führungselemente sein. Es kann dabei vorgesehen sein, dass bestimmte Schwenkstellungen vorwählbar sind und in dieser Schwenkstellung das lose Element 8 zu dem festen Element 7 fixiert werden kann.

In der Figur 2 zeigt, in Abwandlung der Figur 1, eine zweite Ausführungsvariante eines Rollenlagers 1a mit einem festen Element 7a und einem losen Element 8a. Das feste Element 7a weist eine gewölbte Fläche auf, auf welcher eine ebene Fläche des losen Elementes 8a gleitend verschiebbar ist.

In der Figur 3 ist eine Abwandlung des aus der Figur 2 bekannten Rollenlagers dargestellt. Statt der Verwendung zweier drehbarer Rollen ist an dem losen Element 8c eine einzige drehbare Rolle 2c angeordnet. Die drehbare Rolle 2c weist eine Taillierung auf, so dass ein konkaver Rollenkörper entsteht. Aufgrund der Formgebung der Rolle ist der zu transportierende lang gestreckte Körper 4c auch seitlich abgestützt. Je nach Wahl des Durchmessers des zu transportierenden Körpers 4c sowie der Taillierung der Rolle 2c, bilden sich auch bei einer derartigen Anordnung zwei Auflagepunkte A1, A2 heraus. Je nach Dimensionierung wandern diese Auflagepunkte entlang der drehbaren Rolle.

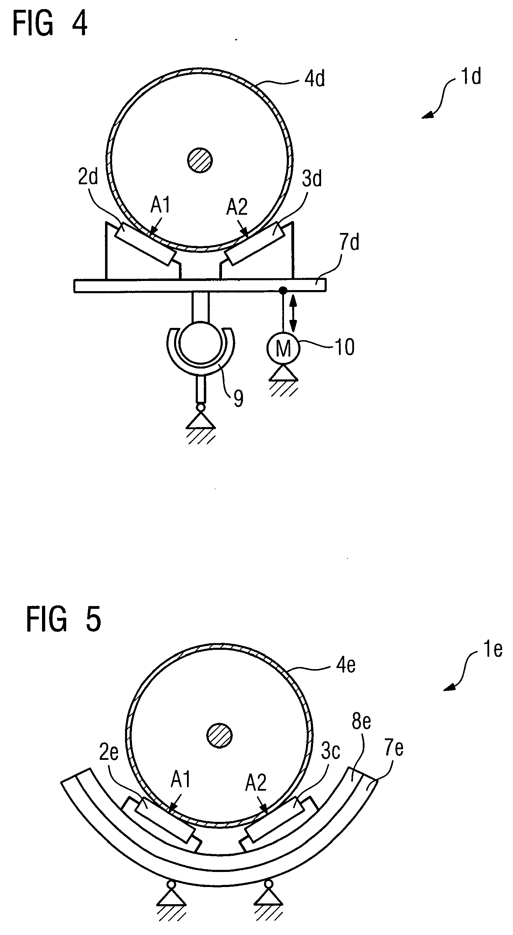

Die Figur 4 zeigt eine dritte Ausgestaltungsvariante eines Rollenlagers 1d. Bei dem Rollenlager 1d ist das lose Element 7d des Gleitlagers auf einem Kugelkopf angeordnet, wobei der Kugelkopf eine gewölbte Gleitfläche bildet. Der Kugelkopf ruht in einer Pfanne 9. Im Zusammenspiel des Kugelkopfes und der Pfanne 9 ist eine Verschwenkung der Rollen 2d, 3d ermöglicht. Durch ein Stellelement 10 wird ein Verschwenken der Rollen 2d, 3d parallel zu einer Achse der Verschieberichtung des Körpers 4d ermöglicht. Dabei kann vorgesehen sein, dass die Auflagekräfte an den Auflagepunkten 1a und 2a gemessen werden und bei einer Differenz über einen zulässigen Betrag hinaus eine entsprechende Ansteuerung des Stellelementes 10 erfolgt. Bei einer Ausgestaltung eines Rollenlagers gemäß der Figur 4 ist weiterhin die Möglichkeit gegeben, das Rollenlager auch um eine quer zur Verschiebeachse des lang gestreckten Körpers liegende Hochachse zu verdrehen und um weitere Achsen zu verschwenken. Dazu können noch weitere Stellelemente vorgesehen werden.

In der Figur 5 ist eine fünfte Variante eines Rollenlagers 1e dargestellt. Das aus einem festen Element 7e und einem losen Element 8e gebildete Schwenklager ist dabei in Form zweier ineinander liegender konkaver Rinnen ausgestaltet. Eine derartige Ausgestaltung ermöglicht es, die bei einer Bewegung des lang gestreckten Körpers auftretenden Verkippungskräfte bzw. Querkräfte zu nutzen, um eine Auslenkung der Rollen 2e, 3e zu erzeugen. Ein Verschwenken der Rollen 2e, 3e kann aufgrund der Rinnenkonstruktion nur um eine Achse erfolgen, die parallel zur Transportrichtung liegt. Bei dem Auftreten einer Querkraft, die an einem der Auflagepunkte A1, A2 eine vergrößerte Auflagekraft erzeugt, wird, aufgrund der gleitenden Lagerung des losen Elementes 8e, eine Auslenkung in Richtung der wirkenden Querkraft bewirkt. Dadurch erfolgt eine stärkere Belastung der bisher einer geringeren Belastung ausgesetzten drehbaren Rolle, bis sich eine annähernd gleichmäßige Kräfteverteilung an den Auflagepunkten A1, A2 der drehbaren Rollen ergibt. Bei einem Nachlassen der Querkräfte erfolgt ein Rückgleiten des losen Elementes 8e in seine Neutrallage.

Darüber hinaus kann auch vorgesehen sein, dass mehrere Rollenlager in axialer Richtung des lang gestreckten Körpers hintereinander liegend angeordnet sind und die jeweiligen Rollenlager beispielsweise von einer gemeinsamen Steuereinrichtung angesteuert werden und jeweils zugeordnete Stellelemente ein gezieltes Verschwenken der drehbaren Rollen ermöglichen. Dadurch ist es möglich, dem Entstehen von Querkräften bereits bei ersten Anzeichen entgegenzuwirken und ein leichtes Verlegen des lang gestreckten Körpers zu ermöglichen.

Neben den in den Figuren dargestellten Ausgestaltungsvarianten können einzelne Elemente, wie die Form der Rollen, die Form der Gleitflächen, die Art der Bewegung der Gleitflächen etc. untereinander ausgetauscht werden, so dass neue Ausgestaltungsvarianten entstehen.

## Patentansprüche

1. Rollenlager (1) mit mindestens einer drehbaren Rolle (2, 3), auf welche ein zu verschiebender lang gestreckter Körper (4) auflegbar ist, wobei die Drehachse der Rolle (2, 3) quer zur Verschieberichtung des Körpers (4) angeordnet ist,
**dadurch gekennzeichnet, dass**
die drehbare Rolle (2, 3) um eine Achse schwenkbar ist.

2. Rollenlager nach Anspruch 1,
**dadurch gekennzeichnet, dass**
die Achse annähernd parallel zur Verschieberichtung des Körpers (4) liegt.

3. Rollenlager nach einem der Ansprüche 1 oder 2,
**dadurch gekennzeichnet, dass**
die zumindest eine Rolle an einem Schwenklager (6) gelagert ist, welches ein festes Element (7) und ein loses Element (8) aufweist, wobei zumindest eines der Elemente eine gewölbte Gleitfläche aufweist, welche auf dem jeweils anderen Element gleitend gelagert ist.

4. Rollenlager nach Anspruch 3,
**dadurch gekennzeichnet, dass**
die Gleitfläche konkav gewölbt ist.

5. Rollenlager nach Anspruch 3,
**dadurch gekennzeichnet, dass**
die Gleitfläche konvex gewölbt ist.

6. Rollenlager nach einem der Ansprüche 3 bis 5,
**dadurch gekennzeichnet, dass**
das feste Element (7) eine konkave Gleitfläche aufweist, auf welcher eine konvexe Gleitfläche des losen Elementes (8) gleitet oder das feste Element (7) eine konvexe Gleitfläche aufweist, auf welcher eine konkave Gleitfläche des losen Elementes (8) gleitet.

7. Rollenlager nach Anspruch 1 bis 6,
**dadurch gekennzeichnet, dass**
die Verschwenkung der Rolle (2, 3) durch während einer Bewegung des Körpers durch diesen hervorgerufene Kräfte erfolgt.

8. Rollenlager nach einem der Ansprüche 1 bis 7,
**dadurch gekennzeichnet, dass**
die Verschwenkung der Rolle (2, 3) durch ein Stellelement erfolgt.

9. Verfahren zum Verschwenken einer Rolle (2, 3) eines Rollenlagers (1) nach einem der Ansprüche 1 bis 8,
**dadurch gekennzeichnet, dass**
- an der einen Rolle (2c) oder an mindestens zwei Rollen (2, 3)zumindest zwei Auflagepunkte (A1, A2) für den Körper angeordnet sind,
- ein Verschwenken der Rolle/Rollen (2c, 2, 3) derart erfolgt, dass die Auflagekräfte an den Auflagepunkten (A1, A2) annähernd gleich groß sind.
